# EUROPEAN PATENT SPECIFICATION

(11) **EP 1 548 982 B1**
(45) Date of publication and mention of the grant of the patent: **22.10.2008**
(21) Application number: 03737858.5
(22) Date of filing: 30.06.2003
(51) Int. Cl.: H04L 12/28, H04L 29/08

(54) **A METHOD OF SEARCHING FOR THE DEVICES AUTOMATICALLY IN NETWORK**
VERFAHREN ZUM AUTOMATISCHEN SUCHEN NACH DEN EINRICHTUNGEN IN EINEM NETZWERK
PROCEDE DE RECHERCHE AUTOMATIQUE DE DISPOSITIFS DANS UN RESEAU

(30) Priority: 06.09.2002 CN 02129656
(43) Date of publication of application: 29.06.2005
(73) Proprietor: Lenovo (Beijing) Limited, Haidan District, Beijing 100085 (CN)
(72) Inventor: LIU, Xiangdong, Haidian District, Beijing 100085 (CN); LUO, Yujin, Haidian District, Beijing 100085 (CN); ZHANG, Yuanyi, Haidian District, Beijing 100085 (CN); HUANG, Jingnan, Haidian District, Beijing 100085 (CN); ZHUANG, Weifeng, Haidian District, Beijing 100085 (CN); ZHANG, Dekui, Haidian District, Beijing 100085 (CN); REN, Yanpin, Haidian District, Beijing 100085 (CN); LI, Ming, Haidian District, Beijing 100085 (CN); MENG, Chuang, Haidian District, Beijing 100085 (CN); JIANG, Shan, Haidian District, Beijing 100085 (CN)
(74) Representative: Skuhra, Udo
(86) International application number: PCT/CN2003/000516
(87) International publication number: WO 2004/023726

(56) References cited:
- EP-A1- 0 940 946
- EP-A2- 0 766 428
- WO-A-02/17560
- WO-A1-00/59230
- WO-A1-99/56435
- GB-A- 2 369 468
- GUTTMAN E: "Service Location Protocol: Automatic Discovery of IP Network Services" IEEE INTERNET COMPUTING, IEEE SERVICE CENTER, NEW YORK, NY, US, vol. 3, no. 4, 1 July 1999 (1999-07-01), pages 71-80, XP002140936 ISSN: 1089-7801
- ANONYMOUS: "A method for auto-discovery of peer application on a network and synchronization of distributed address books" RESEARCH DISCLOSURE, MASON PUBLICATIONS, HAMPSHIRE, GB, vol. 442, no. 72, February 2001 (2001-02), XP007127631 ISSN: 0374-4353
- "Universal Plug and Play Device Architecture, UPnP, Version 1.0" INTERNET CITATION, [Online] 8 June 2000 (2000-06-08), XP002210614 Retrieved from the Internet: URL:http://www.upnp.org> [retrieved on 2002-06-08]
- MARMOR M S: "MAKE THE P2P LEAP WITH TOADNODE" WEB TECHNIQUES, MILLER FREEMAN, US, vol. 5, no. 12, December 2000 (2000-12), pages 44-49, XP008000376 ISSN: 1086-556X

## Description

### BACKGROUND OF THE INVENTION

### FIELD OF THE INVENTION

This invention relates to device searching technologies in a network, more specially, to a method of automatically searching for each other among devices in a digital home network (see also document GB-A 2369 468).

### DESCRIPTION OF THE PRIOR ART

With improving of the material life of the people, devices in a home such as information devices, communication devices, entertainment devices, home electrical appliances, automatic devices, and security monitoring apparatuses are gradually increasing. Meanwhile, due to the rapid popularity of personal computer and Internet in home, flourish development of telecommunication technologies and great improvement of intelligent devices, home network gets more and more attention, and the desire about a simple, flexible and reliable home network is increasing. Thus, a lot of concepts about home network are proposed, such as Smart Home, Electronic Home, e-Home, Digital Family, Network Home, and Intelligent Home. Specifically, Home network has the following four hierarchical meanings: (1) the information devices, communication devices, entertainment devices, home electrical appliances, automatic devices, and security monitoring apparatuses in the home are interconnected and communicate with each other, share resources and form a home intelligent network system; (2) the system is connected to community and Internet by means of a gateway so as to effect the information exchange with the circumstance outside the home; (3) the devices in the home and the connected network should meet a basic requirement of security, convenience, comfort, health and green, so as to provide a pleasure experience to people; and (4) it is easy to use, safe and reliable, convenient to maintain, and inexpensive so as to fulfill the requirements of home life.

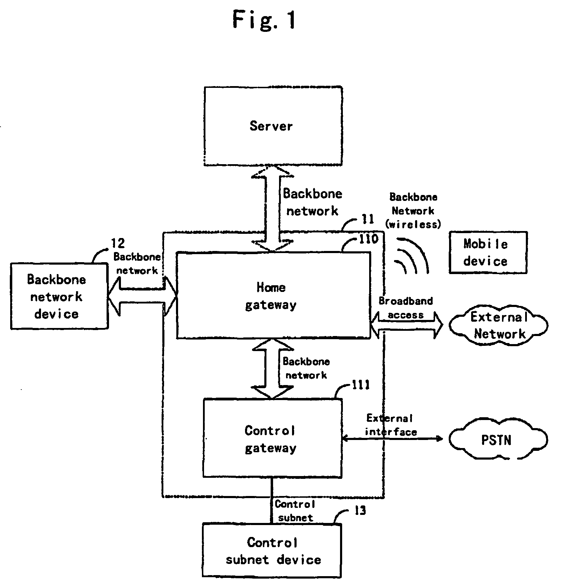

In view of the above, the applicant has proposed a digital home network system in another application, as shown in Fig. 1. This system is mainly composed of a gateway 11, more than one backbone network devices 12 and a plurality of control subnet devices 13. The gateway 11 further includes a home gateway 110 and a control gateway 111, and the home gateway 110 is connected with the control gateway 111 via a broadband interface. Based on the configuration of the system, this digital home network is composed of two subnet, backbone network and control subnet. In which, the portion of network formed by the home gateway 110 and those home devices connected with it is called as backbone network, and the backbone network is mainly used to realize interconnections among the information devices, the communication devices, the entertainment devices and the like. And the portion of network formed by the control gateway 111 and those home devices connected with it is called as control subnet, and the control subnet is mainly used to realize interconnections among the home electrical appliances, the automatic devices and the security monitoring apparatuses and the like. The key idea of such a digital home network is to make the home devices on the home network connect and communicate with each other and share resources. In this home network system, the home gateway, the control gateway and the server can be collectively called as resource management devices and used to manage network resources.

Based on the above network configuration, the interconnections and resources sharing among network devices are achieved as follows.

When a certain device A apply to access a home network, the device A firstly searches resource management devices in the home network, after finding out, it sends a registration request to the resource management device immediately. After the permission of the resource management device, a connection relation is established between the device A and the resource management device on basis of security authentication. After successfully connected, the device A performs a device registration to the resource management device in the network, that is, sends its own device information to the resource management device. Then, the device A registers services it can provide into the resource management device, and the latter stores all of the device information and the service registration information for searching.

When two devices which have connected with the home network are going to communicate, the device A actively initiating the operation firstly sends a device searching request to the resource management device. The resource management device searches in the device information stored thereon if there are any appropriate devices. If so, the corresponding information is sent to the device A. And the device A sends a request to a device B. Upon permitted, the device A performs a service call to the device B. After the completion of the current operations, the two devices disconnect automatically.

When a device leaves a network, the device will perform a device cancellation operation, and those relevant information including device information and service information are deleted from the resource management device.

In the course of the above operation, a resource management device may exist or not. If there is not any resource management device, after respective searching procedures, a peer-to-peer connection is formed between the devices by self-negotiation so as to perform communications. When there is a resource management device, the resource management device will perform a device announcement periodically, that is, announce its own device information to other devices. Those devices other than resource management device can also perform the device announcement in other cases.

During the entire procedure of communications, what should be preliminary solved is the problem of discovering each other among the devices. A conventional device discovering method consists in that a user of device inputs device information manually, and then the devices can discover each other. For example, when a user purchases a printer, users who utilize this printer though network must know information about the printer such as its IP address, and then after setting the information about the printer on its own computer, can use the printer properly. Such an operation manner is very inconvenient to user, and with the increasing of the information devices, these manual operations will be more and more unacceptable.

### SUMMARY OF THE INVENTION

Therefore, a main object of the present invention is to provide a method of searching for devices automatically in a network which makes automatic searching for and connecting with each other among devices possible so as to facilitate the user's operation and improve automatic and intelligent performance of the network.

### The object of the prevent invention is achieved by the following technical solutions:

A method of searching for devices automatically in a network, including at least following steps of:
a. firstly searching, by a device initiating party, whether a resource management device exists in the network when two devices are interconnected; if so, going to step c, otherwise going to step b;
b. announcing its own device information, by the device initiating party, to all other devices in the network, at the same time, monitoring announcement information of all the other devices; when receiving information of other devices, sending a connection request from the device initiating party to a device requiring connection, and completing corresponding operations after receiving a response; for example, the device initiating party sends a peer-to-peer connection establishing request to a partner device, after receiving a response, a peer-to-peer connection is established between these two devices;
c. sending a device searching request from the device initiating party to the resource management device; upon receiving the request, making a search, by the resource management device, among device registration information stored therein; after a device satisfying conditions is found out, information related to that device being immediately sent to the device initiating party, otherwise, informing the device initiating party that the information is not found. The resource management device may send the information related to the device to the device initiating party in a format of device announcement.

In above solution, the step b further includes the step of: after receiving the request of the device initiating party, judging, by a requested party device whether it is accepted or not; if it is accepted, sending a connection accepted response from the requested party device to the device initiating party and then performing device connecting between these two devices; otherwise, sending a connection rejected response from the requested party device to the device initiating party.

The method further includes the step of: when each device applies to access the network, firstly registering its own device information onto the resource management device and forming a master-slave devices relation with the resource management device. Before registration, the resource management device announces its own device information in a multicasting manner, and before the device applying to access makes registration, it firstly receives the device announcement information of the resource management device.

As it can be seen, according to the method for searching devices in the home network proposed in the present invention, when there is no resource management device, each devices issues its own device information over the network in a multicasting manner such that the devices can get known about each other in advance, and then establish connection relation with the devices desired to connect; and when there is a resource management device, each home device can make a search whether a desired device exists or not by means of the resource management device so as to establish a connection relation with that device. Thus, an automatic search among network devices is achieved, and a more convenient service is provided to users, and the automatic and intelligent performance of the network is improved.

### BRIEF DESCRIPTION OF THE DRAWINGS

Figure 1 is a schematic diagram of the structure of the home network according to the invention.
Figure 2 is a flow chart of the device discovering process of the invention.
Figure 3 is a schematic diagram of the peer-to-peer connection relations among devices when there is no resource management device.
Figure 4 is a schematic diagram of the relation between the master device and the slave device when there is a resource management device.
Figure 5 is a schematic diagram of messages in the device searching procedure when there is a resource management device.

### DETAILED DESCRIPTION OF THE PREFERRED EMBODIMENTS

Hereunder, the present invention will be described in detail with reference to the attached drawings.

With respect to the whole digital home network, the connections among home devices may be through a resource management device, and may be not through the resource management device. Therefore, there are correspondingly two cases in the mutual discovering procedure of the home devices, that is, one case where there is a resource management device, and the other case where there is no resource management device.

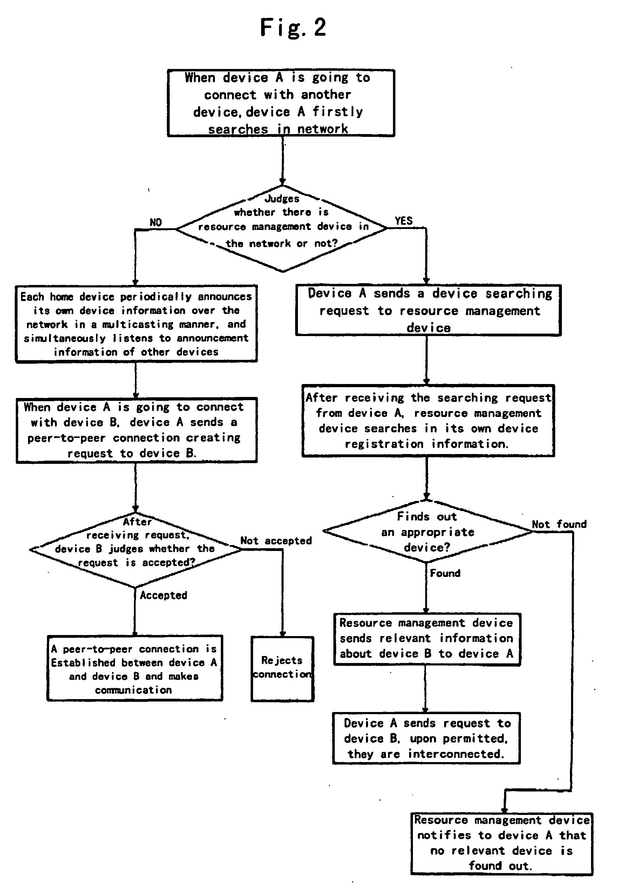

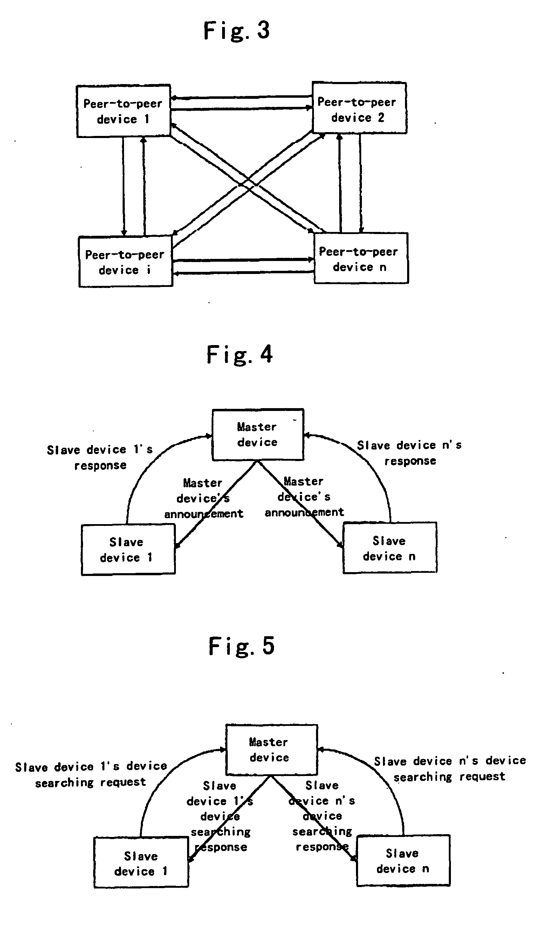

As shown in Fig. 2, the device discovering procedure includes at least the following steps:
a. when a certain device A is going to interconnect with other devices, this device firstly searches in a digital home network, whether a resource management device exists or not, if so, the procedure goes to step c, otherwise goes to step b.
b. when there is no resource management device, each device in the network periodically announces its own device information to the network in a multicasting manner, and simultaneously listens to device announcement messages of other devices to obtain information about other devices. At this time, all home devices communicate and share resources in a peer-to-peer manner, and the peer-to-peer connection relations among devices is shown in Fig. 3. So-called multicasting manner in fact refers to broadcasting, but the object of the broadcasting may be either the entire home network or a specific subnet pre-partitioned. Then, a corresponding point-to-point communication manner is referred as unicasting in the present invention.
   When the device A knows the information about other devices, it may initiate a peer-to-peer connection creating request to a certain device B. Upon receiving the request, the device B judges whether the request is accepted or not according to the relevant information of device A in the request. If the request is not accepted, then a connection rejected response is sent back; otherwise, a connection accepted response is sent back and a device connection is established therebetween. Subsequently, the devices A and B are interconnected, and the services and resources thereon can be exchanged and shared.
c. when there is the resource management device, upon the device A is going to connect with another device, the device A firstly sends a device searching request to the resource management device, and makes a search on the resource management device. Upon receiving the device searching request from the device A, the resource management device makes a search among device registration information stored therein for an appropriate device. If a device B satisfying conditions is found out, a device searching response is sent to the device A, and the relevant information about the device B is sent to the device A in a format of device announcement message and in a unicasting manner. The device A sends a request to the device B directly, and upon permitted, these two devices are interconnected. In this case, the resource management device is a master device, and other devices including the device A and device B are slave devices. Then, a device searching procedure performed among the master device(s) and the slave device(s) is shown in Fig. 5.

Certainly, in the case where the resource management device exists, when each device applies to access the network, it will firstly register to the resource management device. In general, the resource management device makes device announcement to other devices in the network in a multicasting manner to describe that it is a resource management device and can provide an indexing service. When other devices receive the announcement message of the resource management device for the first time, they each register theirs own device information onto the resource management device in a unicasting manner, that is, each device sends a response message to the resource management device respectively. Once the registration is successful, the resource management device will form a master-slave relation with the device registered thereon, which means that the resource management device is the master device and all the devices registered on the resource management device are slave devices, and the relations between the master device and the slave devices are shown in Fig. 4. In fact, whether the registration is successful during the registration procedure is decided by the security authentication mechanism which mainly performed by judging a connection authentication key. If currently there is a plurality of resource management devices, which resource management device the device applying to access should register on is also determined by the security authentication mechanism.

In the performing course of the step c, a format of the device searching message and a format of the device searching response message are shown in Table 1 and Table 2 respectively. Table 1 is a detailed format of the device searching message, including name of field, content of field, type of field, and value range of the field. Table 2 is a detailed format of the device searching response message, also including field name, field content, field type, and value range of the field.

**Table 1**

| FIELD NAME | CONTENT | TYPE | VALUE RANGE |
|---|---|---|---|
| message type | type of message | character string | fixed: DeviceSearch |
| serial number of message | serial number of message | unsigned integer | 0 to 0xFFFFFFFF |
| destination device ID | device ID of message receiver | character string | 32 bytes long character string |
| destination function ID | service ID of message receiver | character string | 8 bytes long character string |
| source device ID | device ID of message sender | character string | 32 bytes long character string |
| source service ID | service ID of message sender | character string | 8 bytes long character string |
| search type | indicating the criteria of searching, which may be one of device name, device type, service name, service type or a combination thereof | unsigned integer | if 0^{th} bit is 1, it refers to search in device name if 1^{st} bit is 1, it refers to search in device type if 2^{nd} bit is 1, it refers to search in service name if 3^{rd} bit is 1, it refers to search in service type |
| device name | indicating the device name in searching | character string | character string with a maximum length of 256 bytes |
| device type | indicating the device type in searching | unsigned integer | 0 to 0xFFFFFFFF |
| service name | indicating the service name in searching | character string | character string with a maximum length of 256 bytes |
| service type | indicating the service type in searching | unsigned integer | 0 to 0xFFFFFFFF |

**Table 2**

| FIELD NAME | CONTENT | TYPE | VALUE RANGE |
|---|---|---|---|
| message type | type of message | character string | fixed: DeviceAdvertisement |
| serial number of message | serial number of message | unsigned integer | 0 to 0xFFFFFFFF |
| destination device ID | device ID of message receiver | character string | 32 bytes long character string |
| destination function ID | service ID of message receiver | character string | 8 bytes long character string |
| source device ID | device ID of message sender | character string | 32 bytes long character string |
| source service ID | service ID of message sender | character string | 8 bytes long character string |
| device name | the name of the found device | character string | character string with a maximum length of 256 bytes |
| device type | the type of the found device | unsigned integer | 0 to 0xFFFFFFFF |
| device ID | ID of the found device | character string | 32 bytes long character string |
| resource management identification | indicating whether this device is a resource management device or not | logic type | "True" or "False" |
| authentication type | authentication type expected by the device, according to which other devices can initiate a authentication procedure | integer | 1 to 3 |
| transmission security level | transmission security level expected by the device, other devices will communicate according to this transmission security level in the course of subsequent communication | integer | 1 to 4 |
| authorization type | authorization method of the device | integer | 1 to 3 1 to 3 |
| device state | the current state of device | character string | must be one of the following two character stings: 1. "ALIVE", the device is in active state; 2. "BYEBYE", the device has left the network. |
| device information upgrading period | period for upgrading device state information, if other devices can not obtain new devices can not obtain new information about the device, then indicating that this device has left the network | integer | 0 to 0xFFFFFFFF |

According to Table 1 and Table 2, the first 6 fields of respective messages are the same, that is, the first field is message type; the second field is serial number of message, this serial number is used for retransmission of the message and the correspondence between the response message and request message; the four fields for the third to the six fields is used to indicate the sender of the message and the receiver of the message.

In practice, the device searching message and the device searching response message can be embodied in XML language. In summary, the above description is only about the preferred embodiments of the present invention, but is not intended to limit the scope of the present invention.

## Claims

1. A method of searching for devices automatically in a network, which is **characterized in that** it includes at least following steps of:
a. firstly searching, by a device initiating party, whether a resource management device exists in the network when two devices are interconnected; if so, going to step c, otherwise going to step b;
b. announcing its own device information, by the device initiating party, to all other devices in the network, at the same time, monitoring announcement information of all the other devices; when receiving information of other devices, sending a connection request from the device initiating party to a device requiring connection, and completing corresponding operations after receiving a response;
c. sending a device searching request from the device initiating party to the resource management device; upon receiving the request, making a search, by the resource management device, among device registration information stored therein; after a device satisfying conditions is found out, information related to that device being immediately sent to the device initiating party, otherwise, informing the device initiating party that the information is not found.

2. The method according to Claim 1, wherein the step b further includes the step of: after receiving the request of the device initiating party, judging, by a requested party device, whether it is accepted or not; if it is accepted, sending a connection accepted response from the requested party device to the device initiating party and then performing device connecting between these two devices; otherwise, sending a connection rejected response from the requested party device to the device initiating party.

3. The method according to Claim 1, wherein it further includes the step of: when each device applies to access the network, firstly registering its own device information onto the resource management device and forming a master-slave devices relation with the resource management device.

4. The method according to Claim 3, wherein it further includes the step of: the resource management device announces its own device information in a multicasting manner, and before the device applying to access makes device registration, it firstly receives the device announcement information of the resource management device.

## Patentansprüche

1. Verfahren zum automatischen Suchen von Vorrichtungen in einem Netzwerk, welches **dadurch gekennzeichnet ist, dass** es wenigstens die folgenden Schritte aufweist:
a. zuerst Suchen durch einen die Vorrichtung initiierenden Teilnehmer, ob eine Vorrichtung für ein Ressourcen-Management in dem Netzwerk existiert, wenn zwei Vorrichtungen miteinander verbunden sind; falls dem so ist, Weiterfahren mit Schritt c, anderenfalls Weiterfahren mit Schritt b;
b. Ankündigen der Information der eigenen Vorrichtung durch den die Vorrichtung initiierenden Teilnehmer an alle anderen Vorrichtungen in dem Netzwerk zur gleichen Zeit, Überwachen der Ankündigungsinformation aller anderen Vorrichtungen; wenn die Information von den anderen Vorrichtungen erhalten wird, Senden einer Verbindungsanforderung von dem die Vorrichtung initiierenden Teilnehmer zu einer Vorrichtung, welche eine Verbindung anfordert, und Vollenden der entsprechenden Arbeitsabläufe nach Empfangen einer Rückantwort;
c. Senden einer Vorrichtungssuchanforderung von dem die Vorrichtung initiierenden Teilnehmer an die Vorrichtung des Ressourcen-Managements; beim Empfangen der Anforderung Durchführen einer Suche durch die Vorrichtung des Ressourcen-Managements innerhalb der darin gespeicherten Vorrichtungsregistrierinformation; nachdem eine Vorrichtung gefunden ist, welche den Bedingungen genügt, sofortiges Senden einer Information, welche sich auf die Vorrichtung bezieht, an den die Vorrichtung initiierenden Teilnehmer, anderenfalls Informieren des die Vorrichtung initiierenden Teilnehmers, dass die Information nicht gefunden wurde.

2. Verfahren nach Anspruch 1, wobei der Schritt b ferner den folgenden Schritt beinhaltet: nach dem Empfangen der Anforderung des die Vorrichtung initiierenden Teilnehmers Beurteilen durch eine Vorrichtung eines angeforderten Teilnehmers, ob sie akzeptiert ist oder nicht; falls sie akzeptiert ist, Senden einer Rückantwort einer akzeptierten Verbindung von der Vorrichtung des angefragten Teilnehmers an die Vorrichtung des initiierenden Teilnehmers und dann Durchführen einer Vorrichtungsverbindung zwischen diesen beiden Vorrichtungen; anderenfalls Senden einer Rückantwort über eine verweigerte Verbindung von der Vorrichtung des angefragten Teilnehmers an die Vorrichtung des initiierenden Teilnehmers.

3. Verfahren nach Anspruch 1, wobei es ferner den folgenden Schritt beinhaltet: Wenn sich jede Vorrichtung meldet, um auf das Netzwerk zuzugreifen, zuerst Registrieren deren eigener Vorrichtungsinformation auf der Vorrichtung des Ressourcen-Managements und Bilden einer Beziehung zwischen den Master-Slave- bzw. Haupt-/Neben-Vorrichtungen mit der Vorrichtung des Ressourcen-Managements.

4. Verfahren nach Anspruch 3, wobei es ferner den folgenden Schritt beinhaltet: die Vorrichtung des Ressourcen-Managements kündigt ihre eigene Vorrichtungsinformation in einer Sammel- bzw. Rundsendeweise an, und bevor die Vorrichtung, welche sich für einen Zugriff anmeldet, eine Vorrichtungsregistrierung durchführt, empfängt sie zuerst die Vorrichtungsankündigungsinformation der Vorrichtung des Ressourcen-Managements.

## Revendications

1. Procédé de recherche automatique de dispositifs dans un réseau, qui est **caractérisé en ce qu'**il comprend au moins les étapes suivantes :
a. rechercher d'abord, par une partie d'introduction de dispositif, si un dispositif de gestion de ressources existe dans le réseau quand deux dispositifs sont interconnectés ; s'il en est ainsi aller à l'étape c, autrement aller à l'étape b ;
b. annoncer ses propres informations de dispositif, par la partie d'introduction de dispositif, à tous les autres dispositifs dans le réseau, en même temps, contrôler les informations d'annonce de tous les autres dispositifs ; lors de la réception d'informations d'autres dispositifs, envoyer une demande de connexion depuis la partie d'introduction de dispositif à un dispositif exigeant une connexion, et achever des opérations correspondantes après la réception d'une réponse ;
c. envoyer une demande de recherche de dispositif depuis la partie d'introduction de dispositif au dispositif de gestion de ressources ; lors de la réception de la demande, établir une recherche, par le dispositif de gestion de ressource, parmi les informations d'enregistrement de dispositif stockées en son sein ; après qu'un dispositif satisfaisant aux conditions est découvert, envoyer immédiatement les informations liées à ce dispositif à la partie d'introduction de dispositif, autrement, informer la partie d'introduction de dispositif que les informations ne sont pas trouvées.

2. Procédé selon la revendication 1, dans lequel l'étape b comprend en outre l'étape consistant à : après la réception de la demande de la partie d'introduction de dispositif, déterminer, par un dispositif de partie en demande, s'il est accepté ou non ; s'il est accepté, envoyer une réponse de connexion acceptée depuis le dispositif de partie en demande à la partie d'introduction de dispositif et ensuite effectuer une connexion de dispositif entre ces deux dispositifs ; autrement, envoyer une réponse de connexion rejetée depuis le dispositif de partie en demande à la partie d'introduction de dispositif.

3. Procédé selon la revendication 1, dans lequel il comprend en outre l'étape consistant à : lorsque chaque dispositif s'applique à accéder au réseau, enregistrer d'abord ses propres informations de dispositif sur le dispositif de gestion de ressources et former une relation de dispositifs maître - esclave avec le dispositif de gestion de ressources.

4. Procédé selon la revendication 3, dans lequel il comprend en outre l'étape suivante : le dispositif de gestion de ressources annonce ses propres informations de dispositif d'une façon multidiffusée, et avant que le dispositif appliquant l'accès n'effectue l'enregistrement de dispositif, il reçoit d'abord les informations d'annonce de dispositif du dispositif de gestion de ressources.
